# NEUE EUROPÄISCHE PATENTSCHRIFT

(11) **EP 3 256 418 B2**
(45) Veröffentlichungstag und Bekanntmachung des Hinweises auf die Entscheidung über den Einspruch: **22.03.2023**
(45) Hinweis auf die Patenterteilung: 30.01.2019
(21) Anmeldenummer: 16720319.9
(22) Anmeldetag: 10.02.2016
(51) Int. Cl.: B67D 7/02, F16L 37/44, F16L 37/62, F16L 55/00, F16L 55/10, B60H 1/00, B67D 7/06, B67D 7/42, F25B 45/00

(54) **VERFAHREN ZUM BETRIEB EINES BEFÜLLADAPTERS UND BEFÜLLADAPTER ZUR BEFÜLLUNG VON FAHRZEUGKLIMASYSTEMEN MIT KÄLTEMITTEL R744**
METHOD FOR OPERATING A FILLING ADAPTER, AND FILLING ADAPTER FOR FILLING REFRIGERANT R744 INTO VEHICLE AIR CONDITIONING SYSTEMS
PROCÉDÉ DE FONCTIONNEMENT D'UN ADAPTATEUR DE REMPLISSAGE ET ADAPTATEUR DE REMPLISSAGE POUR REMPLIR DES CLIMATISEURS DE VÉHICULES AVEC DU RÉFRIGÉRANT R744

(30) Priorität: 11.02.2015 DE 102015001767
(43) Veröffentlichungstag der Anmeldung: 20.12.2017
(73) Patentinhaber: Dürr Somac GmbH, 09366 Stollberg (DE)
(72) Erfinder: SELBMANN, Eric, 09255 Gersdorf (DE); WIELAND, Frank, 09235 Burkhardtsdorf (DE); KÖHLER, Felix, 08289 Schneeberg (DE)
(74) Vertreter: Findeisen Neumann Scheit Partnerschaft mbB
(86) Internationale Anmeldenummer: PCT/DE2016/000051
(87) Internationale Veröffentlichungsnummer: WO 2016/127973

(56) Entgegenhaltungen:
- US-A- 4 889 149
- US-A1- 2003 226 598
- US-B1- 6 298 886

## Beschreibung

Die Erfindung betrifft einen Befülladapter zur Befüllung von Fahrzeugklimasystemen mit Kältemittel R744. Dabei weist der Befülladapter als Spannkugeln ausgestaltete mechanische Spannelemente auf, die über einen pneumatisch oder mechanisch angesteuerten Spannkolben betätigt werden. Die Spannelemente werden durch den Spannkolben für den Befüllvorgang auf spezifisch ausgestalteten Abschnitten des Fahrzeugklimasystems gespannt und während des Befüllvorganges in der Spannposition gehalten. Ein Befülladapter ist aus der US 6 298 886 B1 bekannt.

Befülladapter zur Befüllung von Fahrzeugklimasystemen sind überwiegend so ausgestaltet, dass sie mit mechanischen Spannelementen, die über einen pneumatisch oder mechanisch angesteuerten Spannkolben betätigt werden, auf spezifisch ausgebildeten Bauteilabschnitten des Fahrzeugklimasystems gespannt werden. Die insbesondere als Spannklauen oder als Kugeln ausgeführten mechanischen Spannelemente werden dabei durch den Spannkolben in der Spannposition gehalten. Sofern jedoch die Ansteuerung während des Füllprozesses ausfällt oder eine fehlerhafte Ansteuerung des Spannkolbens auftritt, wird nicht nur der Füllprozess beeinträchtigt, sondern es kommt zu einem Abwurf des Befülladapters von der jeweiligen Fahrzeugschnittstelle. Dieser Abwurf wird durch die kinetische Energie aus der Befülldrucklage zusätzlich beschleunigt.

Für Fahrzeugklimasysteme werden auf Grundlage gesetzlicher Anforderungen zunehmend Kältemittel verwendet, die umweltfreundlichen Aspekten gerecht werden. Dazu gehört auch CO₂, das als Kältemittel die Bezeichnung R744 trägt. Die Befüllung mit diesem Kältemittel R744 erfolgt in typischen Drucklagen zwischen 80 bar und 120 bar. In diesen Drucklagen ist eine sichere Klemmung des Befülladapters während des Befüllvorganges eine wesentliche sicherheitstechnische Voraussetzung zum Schutz der Werker im Arbeitsumfeld. Allerdings entsteht im genannten typischen hohen Druckbereich eine sehr große Gegenkraft, die vom Adapterspannsystem aufgenommen werden muss. Sofern dies nicht gewährleistet ist, kann es zu Undichtheiten im Füllprozess oder sogar zum kompletten Verlust der Adapterspannung kommen, wodurch eine sehr starke Sicherheitsgefährdung für einen Werker auftritt, der die Befüllanlage bedient oder Arbeiten im Motorraum des zu befüllenden Fahrzeuges durchführt.

Solche Gefährdungen des Werkers können vermindert oder weitgehend vermieden werden, indem das Spannsystem sicher gegenüber dem Anlagen- bzw. Systemdruck ausgeführt wird. So besteht die Möglichkeit, den Spannkolben in seiner Spannposition zu verriegeln (Sperren) und das Verriegelungselement mit einem Sensor zu überwachen. Dies beeinflusst jedoch die Baugröße und das Gewicht des Spannsystems nachteilig. Diesbezüglich ist zu beachten, dass der die Anlage bedienende Werker häufig (oft nach jeweils 80 Sekunden) den Befülladapter zwischen der Befüllanlage und dem Fahrzeug transportiert und adaptiert. Die Vergrößerung des Spannsystems infolge einer Spannkolbenverriegelung und/oder einer Spannkolbenüberwachung wirkt sich somit negativ auf Ergonomie und Arbeitsbelastung aus und belastet darüber hinaus die Fahrzeuganschlüsse. Dies ist ein erheblicher Nachteil oder sogar ein Ausschlusskriterium dieser Lösungsansätze. Weiterhin erhöht sich zwangsläufig der steuerungstechnische Aufwand.

Aufgabe der Erfindung ist es, eine technische Lösung zu schaffen, mit der die Verriegelung eines mechanischen Spannsystems für eine Befüllung mit dem Kältemittel R744 dauerhaft zu sperren ist, sofern das Füllventil oder das Fahrzeugventil nicht geschlossen sind oder sofern der Steuerdruck unter einen vorab definierbaren Wert abfällt.

Diese Aufgabe wird durch die Merkmale des Anspruchs 1 gelöst.

Mit der erfindungsgemäßen technischen Lösung ist es möglich, ein Spannsystem zur Befüllung von Fahrzeugklimasystemen unter Aspekten der Bedienersicherheit bei gleichzeitig höherer Funktionssicherheit zu verbessern. Das entsprechend modifizierte Spannsystem ermöglicht zunächst ein gefahrenfreies und sicheres Verbinden mit dem Fahrzeugsystem und nachfolgend eine sichere Befüllung in den für das Kältemittel R744 typischen Drucklagen.

Dabei wird das Spannprinzip so ausgeführt, dass der Spannkolben unter Zuhilfenahme der Drucklage des Kältemittels R744 als Befüllmedium zusätzlich gespannt wird. Erst wenn der Systemdruck einen Grenzwert, der für die Sicherheit des Anlagenbedieners unkritisch ist, unterschreitet, wird es wieder möglich, das Spannsystem zu entspannen und vom Fahrzeugsystem abzukoppeln.

Durch die kombinierte Druckbeaufschlagung mit Systemdruck und Befülldruck kann das Spannsystem konstruktiv so ausgestaltet werden, dass das Volumen und folglich das Gewicht des gesamten Befülladapters gering gehalten werden. Somit werden die Fahrzeuganschlüsse mechanisch wenig belastet und eine akzeptable Handhabung für den Werker erreicht.

Nachfolgend wird ein Ausführungsbeispiel anhand der Zeichnung erläutert.

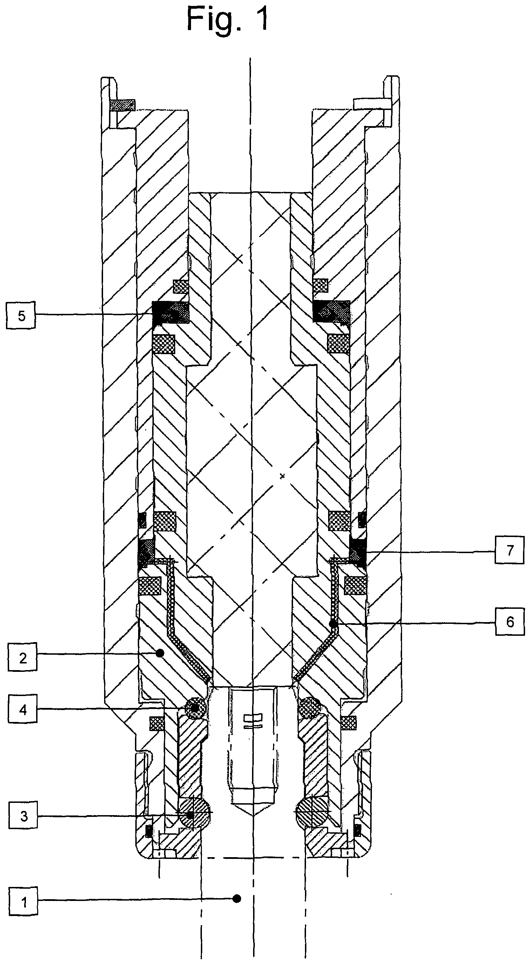

**Fig. 1** zeigt den prinzipiellen Aufbau eines Befülladapters zur Befüllung von Fahrzeugklimasystemen mit einem Kältemittel R744. Dieser Befülladapter weist mehrere Kugeln 3 als mechanische Spannelemente auf, die über einen Spannkolben 2, der vorzugsweise pneumatisch oder mechanisch angesteuert wird, auf spezifisch ausgestaltete Abschnitte des Fahrzeugklimasystems gespannt und während des Befüllvorganges in einer Spannposition gehalten werden. Dieser Aufbau mit Service Port 1 zum Fahrzeugsystem, einer Dichtung 4 zum Fahrzeugsystem und weiteren Bauteilen ist grundsätzlich bekannt, so dass nachfolgend nur die im vorliegenden Sachverhalt relevanten Komponenten näher erläutert werden.

Demzufolge weist der Spannkolben 2 zwei separate Kolbenflächen 5 und 7 zur Druckbeaufschlagung mit jeweils unterschiedlichen Druckmedien auf. Die eine Kolbenfläche 5 wird mit dem Steuerdruck des Befülladapters in Wirkverbindung gebracht und die andere Kolbenfläche 7 wird mit dem Befülldruck des Kältemittels R744 in Wirkverbindung gebracht.

Die zwei Kolbenflächen 5; 7 sind jeweils als eine umlaufende kreisringförmige Fläche an Querschnittsübergängen an der Kontur des Spannkolbens 2 ausgestaltet. Dabei ist die konkrete räumliche Anordnung weitgehend frei wählbar. Es sollte lediglich beachtet werden, dass zugeordnete Verbindungskanäle oder dergleichen für das jeweilige Druckmedium funktionell einwandfrei mit den Kolbenflächen 5; 7 zusammenwirken können.

Dabei zweigt von der mit dem Befülldruck des Kältemittels in Wirkverbindung stehenden Kolbenfläche 7 mindestens eine Bypassleitung 6 zu der Kältemittelzuführung ab. An der anderen Kolbenfläche 5, die mit dem Steuerdruck des Befülladapters in Wirkverbindung steht, liegt beispielsweise eine Steuerdruckluft von etwa 10 bar an.

Mit einer derartigen konstruktiven Ausgestaltung ist es möglich, dass der Spannkolben 2 mit zwei unterschiedlichen Druckmedien beaufschlagt wird. Hierbei erfolgt zunächst eine Beaufschlagung mit dem Steuerdruck des Befülladapters an der Kolbenfläche 5 und danach eine Beaufschlagung mit dem Befülldruck des Kältemittels an der Kolbenfläche 7.

Dies führt funktionell dazu, dass der Steuerdruck des Befülladapters eine Grundarretierung des Spannkolbens 2 mit einem ersten Spanndruck bewirkt. Weiterhin bewirkt der Befülldruck des Kältemittels eine hiervon unabhängige zweite Arretierung des Spannkolbens 2 mit einem anderen zweiten Spanndruck. Hierbei ist ausdrücklich darauf hinzuweisen, dass primär keine Verstärkung des auf den Spannkolben 2 wirkenden Drucks angestrebt wird. Vielmehr wird eine Beaufschlagung durch den Steuerdruck und den Befülldruck, also eine Beaufschlagung mit zwei unterschiedlichen Druckquellen realisiert. Demzufolge wird erreicht, dass der Spannkolben 2 auch bei einem Abfall oder Ausfall einer der beiden Druckkomponenten, z.B. wegen eines nicht korrekt geschlossenen Füllventils oder Fahrzeugventils, lagefixiert in seiner Spannposition gehalten wird. Dies ist ein erheblicher Vorteil gegenüber den bisher üblichen Befülladaptern.

Eine Entriegelung der mechanischen Spannelemente 3 wird erst möglich, nachdem der Befülldruck des Kältemittels auf einen gerätespezifisch definierbaren Wert reduziert und folglich der Spannkolben aus seiner Spannposition verlagerbar ist.

### Bezugszeichenliste

1 Service Port Fahrzeugsystem
2 Spannkolben
3 mechanisches Spannelement (Kugel)
4 Dichtung zum Fahrzeugsystem
5 erste Kolbenfläche / Ansteuerung Spannkolben mit Steuerdruck
6 Bypass für Befülldruck
7 zweite Kolbenfläche / Ansteuerung Spannkolben mit Befülldruck

## Patentansprüche

1. Befülladapter zur Befüllung von Fahrzeugklimasystemen mit dem Kältemittel R744, wobei der Befülladapter als Spannkugeln (3) ausgestaltete mechanische Spannelemente aufweist, die über einen pneumatisch oder mechanisch angesteuerten Spannkolben (2) betätigt werden, wobei die Spannkugeln (3) durch den Spannkolben (2) für den Befüllvorgang auf spezifisch ausgestalteten Abschnitten des Fahrzeugklimasystems gespannt und während des Befüllvorganges in der Spannposition gehalten werden, **dadurch gekennzeichnet,**
**dass** der Spannkolben (2) derart mit zwei unterschiedlichen Druckmedien beaufschlagt wird, dass zunächst eine Beaufschlagung mit dem Steuerdruck des Befülladapters derart erfolgt, dass der Spannkolben (2) in Richtung zu einem Befüllanschluss am Befülladapter bewegt wird, wobei der Spannkolben (2) während dieser Bewegung mit seinem vorderen stirnseitigen Abschnitt zunehmend die Spannkugeln (3) übergreift und die Spannkugeln (3) auf den zugeordneten Abschnitt des Fahrzeugklimasystems drückt und dass nachfolgend eine zusätzliche Beaufschlagung mit dem Befülldruck des Kältemittels erfolgt und dass der Spannkolben (2) mindestens zwei separate Kolbenflächen (5; 7) zur Druckbeaufschlagung mit jeweils unterschiedlichen Druckmedien aufweist, wobei die eine Kolbenfläche (5) mit dem Steuerdruck des Befülladapters und die andere Kolbenfläche (7) mit dem Befülldruck des Kältemittels in Wirkverbindung gebracht wird, wobei die zwei separaten Kolbenflächen (5; 7) jeweils als umlaufende kreisringförmige Fläche an Querschnittsübergängen an der Kontur des Spannkolbens (2) ausgestaltet sind.

2. Befülladapter nach Anspruch 1, **dadurch gekennzeichnet,**
**dass** von der mit dem Befülldruck des Kältemittels in Wirkverbindung stehenden Kolbenfläche (7) mindestens eine Bypassleitung (6) zur Kältemittelzuführung abzweigt.

3. Befülladapter nach Anspruch 1, **dadurch gekennzeichnet,**
**dass** an der mit dem Steuerdruck des Befülladapters in Wirkverbindung stehenden Kolbenfläche (5) eine Steuerdruckluft von etwa 10 bar anliegt.

## Claims

1. A filling adapter for filling vehicle air-conditioning systems with the coolant R744, wherein the filling adapter comprises mechanical clamping elements which are designed as clamping balls (3) and are actuated via a pneumatically or mechanically controlled clamping piston (2), wherein the clamping balls (3) are clamped by the clamping piston (2) for the filling process on specifically designed sections of the vehicle air-conditioning system and are held in the clamping position during the filling process, **characterized in that**
two different pressure media are applied to the clamping piston (2) in such a way that, first, the control pressure of the filling adapter is applied to it in such a way that the clamping piston (2) is moved in the direction of a filling port on the filling adapter, wherein during this movement the clamping piston (2) increasingly engages over the clamping balls (3) with its front end section and presses the clamping balls (3) onto the associated section of the vehicle air-conditioning system and that subsequently an additional application of the filling pressure of the coolant takes place, and **in that** the clamping piston (2) comprises at least two separate piston surfaces (5; 7) for pressurization with different pressure media in each case, wherein one piston surface (5) is brought into an operative connection with the control pressure of the filling adapter and the other piston surface (7) is brought into an operative connection with the filling pressure of the coolant, wherein the two separate piston surfaces (5; 7) are each configured as a circumferential annular surface at cross-sectional transitions on the contour of the clamping piston (2).

2. The filling adapter according to claim 1, **characterized in that**
at least one bypass line (6) branches off to the coolant supply from the piston surface (7) that is in operative connection with the filling pressure of the coolant.

3. The filling adapter according to claim 1, **characterized in that**
control compressed air of approximately 10 bar is applied to the piston surface (5) which is operatively connected to the control pressure of the filling adapter.

## Revendications

1. Adaptateur de remplissage destiné au remplissage des climatiseurs de véhicules en réfrigérant R744, où l'adaptateur de remplissage est doté d'éléments de serrage mécaniques conçus comme des billes de serrage (3), qui sont actionnées par un piston de serrage (2) à commande pneumatique ou mécanique, où les billes de serrage (3) sont serrées par le piston de serrage (2) pour l'opération de remplissage sur des sections spécifiquement conçues à cet effet du climatiseur de véhicule et sont maintenues en position de serrage pendant l'opération de remplissage, **caractérisé en ce que**,
le piston de serrage (2) est soumis à deux fluides sous pression différents de telle sorte qu'il lui est d'abord appliqué la pression de commande de l'adaptateur de remplissage, de telle sorte que le piston de serrage (2) est déplacé en direction d'un raccord de remplissage sur l'adaptateur de remplissage, le piston de serrage (2), pendant ce mouvement, s'engageant de plus en plus avec sa partie frontale avant sur les billes de serrage (3) et pressant les billes de serrage (3) sur la partie correspondante du système de climatisation du véhicule, et **en ce qu'**il se produit ensuite un impact supplémentaire avec la pression de remplissage du réfrigérant, et **en ce que** le piston de serrage (2) doté d'au moins deux surfaces de piston séparées (5; 7) servant à la mise en pression avec des fluides sous pression différents, où la mise en liaison active de l'une des surfaces de piston (5) est effectuée par la pression de commande de l'adaptateur de remplissage, celle de l'autre surface de piston (7) étant assurée par la pression de remplissage du réfrigérant, les deux surfaces de piston séparées (5; 7) étant réalisées respectivement sous la forme d'une surface périphérique et circulaire au niveau des transitions de section sur le contour du piston de serrage (2).

2. Adaptateur de remplissage suivant la revendication 1, **caractérisé en ce**
**qu'**à partir de la surface de piston (7) étant en liaison active avec la pression de remplissage du réfrigérant, au moins une conduite de dérivation (6) mène à l'alimentation du réfrigérant.

3. Adaptateur de remplissage suivant la revendication 1, **caractérisé en ce**
**qu'**au niveau de la surface de piston (5) qui est en liaison active avec la pression de commande de l'adaptateur de remplissage, la pression de commande est d'environ 10 bars.
